# EUROPEAN PATENT SPECIFICATION

(11) **EP 2 004 545 B1**
(45) Date of publication and mention of the grant of the patent: **21.11.2018**
(21) Application number: 07716099.2
(22) Date of filing: 06.03.2007
(51) Int. Cl.: C01B 11/02

(54) **PROCESS FOR THE PRODUCTION OF CHLORINE DIOXIDE**
VERFAHREN ZUR HERSTELLUNG VON CHLORDIOXID
PROCÉDÉ DE PRODUCTION DE BIOXYDE DE CHLORE

(30) Priority: 10.04.2006 US 790523 P; 19.06.2006 EP 06115670
(43) Date of publication of application: 24.12.2008
(73) Proprietor: Akzo Nobel N.V., 6800 SB Arnhem (NL); Akzo Nobel Pulp and Performance Chemicals AB, 445 80 Bohus (SE)
(72) Inventor: WOODRUFF, Thomas, E., Marietta, Georgia 30064 (US); CHARLES, Gary, A., Marietta, Georgia 30062 (US); OLSON, Daniel, D., Woodstock, Georgia 30189 (US)
(74) Representative: HGF Limited
(86) International application number: PCT/SE2007/050125
(87) International publication number: WO 2007/117205

(56) References cited:
- EP-A- 0 850 875
- US-A- 2 344 346
- US-A- 2 833 624
- US-A- 4 393 035
- US-A1- 2003 031 621

## Description

The present invention relates to a process and a production unit for the production of chlorine dioxide from alkali metal chlorate, acid and a reducing agent.

Chlorine dioxide is used in various applications such as pulp bleaching, fat bleaching, water purification and removal of organic materials from industrial wastes. Since chlorine dioxide is not storage stable, it is generally produced on-site.

In large scale processes chlorine dioxide is usually produced by reacting alkali metal chlorate with a reducing agent in an aqueous reaction medium. Chlorine dioxide may be withdrawn from the reaction medium as a gas, like in the processes described in e.g. US patents 5091166, 5091167 and EP patent 612686. Normally the chlorine dioxide gas is then absorbed into water to form an aqueous solution thereof. These large-scale processes are highly efficient but require extensive process equipment and instrumentation.

For the production of chlorine dioxide from alkali metal chlorate in small-scale units, such as for water purification applications or small bleaching plants, the chlorine dioxide is usually not separated from the reaction medium. Instead, a product stream comprising chlorine dioxide, salt, excess acid and optionally un-reacted chlorate is withdrawn from the reactor and used directly, usually after dilution with water in an eductor. Such processes have in recent years become commercial and are described in e.g. US patents 2833624, 4534952, 5895638, 6387344, 6790427 and 7070710, and in US patent applications Publ. No. 2004/0175322, Publ. No. 2003/0031621 , Publ. No 2005/0186131 and Publ. No. 2006/0133983. The required process equipment and instrumentation are considerably less extensive than in the large-scale processes described above. However, for some applications where small-scale units would be suitable, it may be desirable to obtain the chlorine dioxide as a gas phase, or as an aqueous solution of high concentration and/or without the excess acid and salt
EP 0 850 875 A1 and US 2344346 disclose continuous processes for the production of chlorine dioxide by reaction of sodium chlorate with mineral acid(s) involving an air-fed eductor.

It is an object of the invention to provide a simple process for the production of chlorine dioxide of high concentration and/or being substantially free from excess acid and salt by-product.

It another object of the invention to provide a production unit for performing the process.

It has been found possible to meet these objects in a process where a product stream from a reactor is diluted in an eductor fed with a gaseous motive stream. Thus, one aspect of the invention concerns a process for the production of chlorine dioxide, said process comprising the steps of continuously: feeding to a reactor an acid, alkali metal chlorate and a reducing agent; reacting the alkali metal chlorate with the acid and the reducing agent to form a product stream comprising chlorine dioxide, water and alkali metal salt of the acid; and, bringing the product stream including any liquid and gas in the reactor from the reactor to an eductor and mixing it with a gaseous motive stream fed to the eductor and thereby forming a diluted product stream. This diluted product stream can be used as such, e.g. as a bleaching agent, for water purification or any other suitable application for chlorine dioxide, but can also be treated in one or more unit operations.

An embodiment of the invention further comprises the steps of bringing the diluted product stream to a gas-liquid separator; separating gas from liquid in the diluted product stream to form a gas stream comprising chlorine dioxide; and withdrawing the gas stream comprising chlorine dioxide from the gas-liquid separator. This gas stream can be used as such in any suitable application for chlorine dioxide in gas phase such as bleaching or water purification, or be treated in one or more unit operations, such as absorption into water. In the latter case, the process preferably further comprises the steps of bringing the gas stream comprising chlorine dioxide from the gas-liquid separator to an absorber; contacting said gas stream with a flow of water to form an aqueous solution containing chlorine dioxide; and withdrawing the aqueous solution containing chlorine dioxide from the absorber. This aqueous solution may then be used for any suitable application such as bleaching or water purification. Another embodiment of the invention comprises the steps of bringing the diluted product stream from the eductor to an absorber; contacting the diluted product stream with a flow of water to form an aqueous solution containing chlorine dioxide; and withdrawing the aqueous solution containing chlorine dioxide from the absorber. Thus, the diluted product stream is brought to the absorber without any previous gas-liquid separation. The aqueous solution obtained may be used for any suitable application such as bleaching or water purification.

Using a gaseous motive stream instead of a liquid for the eductor enables production of chlorine dioxide of high concentration and/or substantially free from excess salts and acid with comparatively low duty on following unit operations such as gas-liquid separation and/or absorption. Moreover, the need for adding inert gas at a later stage to further dilute the chlorine dioxide to minimize the risk for decomposition is reduced and in some cases eliminated.

The reactor can be operated as described in the earlier mentioned US patents 2833624, 4534952, 5895638, 6387344, 6790427 and 7070710, and US patent application Publ. No. 2004/0175322, Publ. No. 2003/0031621 and Publ No. US2005/0186131.

Any reducing agent commonly used in chlorine dioxide production such as sulphur dioxide, chloride, methanol and hydrogen peroxide can be used, of which hydrogen peroxide is particularly preferred.

The alkali metal chlorate is suitably fed to the reactor as an aqueous solution. The alkali metal may, for example, be sodium, potassium or mixtures thereof, of which sodium is most preferred. The acid is preferably a mineral acid such as sulfuric acid, hydrochloric acid, nitric acid, perchloric acid or mixtures thereof, of which sulfuric acid is most preferred. If the reducing agent is hydrogen peroxide, the molar ratio H₂O₂ to ClO₃⁻ fed to the reactor is suitably from 0.2:1 to 2:1, preferably from 0.5:1 to 1.5:1 , most preferably from 0.5:1 to 1:1. Usually it is preferred that the molar ratio of reducing agent to chlorate is at least stochiometric. Alkali metal chlorate always contains some chloride as an impurity, but it is fully possible also to feed more chloride to the reactor, such as metal chloride or hydrochloric acid. However, in order to minimize the formation of chlorine it is preferred to keep the amount of chloride ions fed to the reactor low, suitably below 1 mol%, preferably below 0.1 mol%, more preferably less than 0.05 mol%, most preferably less than 0.02 mol% Cl⁻ of the ClO₃⁻(including chloride present in the chlorate as an impurity from the production thereof).

In the case sulfuric acid is used as a feed to the reactor, it preferably has a concentration from 60 to 98 wt%, most preferably from 70 to 85 wt% and preferably a temperature from 0 to 80°C, most preferably from 20 to 60°C. Preferably from 2 to 7 kg H₂SO₄, most preferably from 3 to 5 kg H₂SO₄ is fed per kg ClO₂ produced. In order to use sulphuric acid of high concentration, a dilution and cooling scheme as described in US patent application Publ. No. 2004/0175322 is preferably applied.

In a particularly preferred embodiment alkali metal chlorate and hydrogen peroxide is fed to the reactor in the form of a premixed aqueous solution, for example a composition as described in US 7070710. Such a composition may be an aqueous solution comprising from 1 to 6.5 moles/litre, preferably from 3 to 6 moles/litre of alkali metal chlorate, from 1 to 7 moles/litre, preferably from 3 to 5 moles/litre of hydrogen peroxide and at least one of a protective colloid, a radical scavenger or a phosphonic acid based complexing agent, wherein the pH of the aqueous solution suitably is from 0.5 to 4, preferably from 1 to 3.5, most preferably from 1.5 to 3. Preferably, at least one phosphonic acid based complexing agent is present, preferably in an amount from 0.1 to 5 mmoles/litre, most preferably from 0.5 to 3 m moles/litre. If a protective colloid is present, its concentration is preferably from 0.001 to 0.5 moles/litre, most preferably from 0.02 to 0.05 moles/litre. If a radical scavenger is present, its concentration is preferably from 0.01 to 1 moles/litre, most preferably from 0.02 to 0.2 moles/litre. Particularly preferred compositions comprise at least one phosphonic acid based complexing agent selected from the group consisting of 1-hydroxyethylidene-1,1-diphosphonic acid, 1-aminoethane- 1,1-diphosphonic acid, aminotri (methylenephosphonic acid), ethylene diamine tetra (methylenephosphonic acid), hexamethylene diamine tetra (methylenephosphonic acid), diethylenetriamine penta (methylenephosphonic acid), diethylenetriamine hexa (methylenephosphonic acid), 1-aminoalkane-1,1-diphosphonic acids (such as morpholinomethane diphosphonic acid, N,N-dimethyl aminodimethyl diphosphonic acid, aminomethyl diphosphonic acid), reaction products and salts thereof, preferably sodium salts. Useful protective colloids include tin compounds, such as alkali metal stannate, particularly sodium stannate (Na₂(Sn(OH)₆). Useful radical scavengers include pyridine carboxylic acids, such as 2,6-pyridine dicarboxylic acid. Suitably the amount of chloride ions is below 300 mmoles/litre, preferably below 50 mmoles/litre, more preferably below 5 mmoles/litre, most preferably below 0.5 mmoles/litre.

The temperature in the reactor is suitably maintained below the boiling point of the reactants and the liquid part of the product stream at the prevailing pressure, preferably from 20 to 80°C, most preferably from 30 to 60°C. The pressure maintained within the reactor is suitably slightly subatmospheric, preferably from 30 to 100 kPa absolute, most preferably from 65 to 95 kPa absolute.

The reactor may comprise one or several vessels, for example arranged vertically, horizontally or inclined. The reactants may be fed directly to the reactor or via a separate mixing device. The reactor is a substantially tubular through-flow vessel or pipe, most preferably comprising means for mixing the reactants in a substantially uniform manner. Such means for mixing are described in e.g. US 6790427 and US patent application Publ. No. 2004/0175322.

The feed chemicals, including acid, alkali metal chlorate and reducing agent, are preferably fed close to one end of the reactor and the product stream is preferably withdrawn at the other end of the reactor.

The length (in the main flow direction) of the reactor used is preferably from 150 to 1500 mm, most preferably from 300 to 900 mm. It has been found favourable to use a substantially tubular reactor with an inner diameter from 25 to 300 mm, preferably from 50 to 150 mm. It is particularly favourable to use a substantially tubular reactor having a preferred ratio of the length to the inner diameter from 12:1 to 1 :1, most preferably from 8:1 to 4:1. A suitable average residence time in the reactor is in most cases from 1 to 60 seconds, preferably from 3 to 20 seconds.

The reaction between alkali metal chlorate, acid and reducing agent results in the formation of a product stream comprising chlorine dioxide, alkali metal salt of the acid, water and, in most cases some remaining unreacted feed chemicals. If hydrogen peroxide is used as reducing agent, the product stream also comprises oxygen. If sulfuric acid is used as acid, the product stream comprises alkali metal sulfate. The product stream comprises both liquid and gas and may at least partly be in the form of foam. Chlorine dioxide and oxygen may be present both as dissolved in the liquid and as gas bubbles, while the alkali metal salt of the acid usually is dissolved in the liquid.

It has been found possible to achieve a conversion degree of alkali metal chlorate to chlorine dioxide from 75% to 100%, preferably from 80 to 100%, most preferably from 95 to 100%.

The product stream withdrawn from the reactor, including any liquid and gas therein, is brought to the eductor, preferably by a suction force created by the eductor. The product stream is then mixed in the eductor with the gaseous motive stream fed thereto to form a diluted product stream, usually also comprising both liquid and gas. Any kind of eductor that can be operated with a gaseous motive stream may be used, and such eductors are also commercially available. The gaseous motive stream, also referred to as motive gas, is preferably a gas or mixture of gases that is inert in respect of chlorine dioxide. Examples of such gases include nitrogen, oxygen and noble gases. For practical and economical reasons air is preferred.

In the embodiments in which the diluted product stream from the eductor is brought to a gas-liquid separator, at least part of the gas dissolved in the liquid therein is separated therefrom. To facilitate the separation inert gas may be added to the diluted product stream, either within the gas-liquid separator or prior to entering the separator. Depending on how much gas that has been mixed into the product stream in the eductor, inert gas added in connection with gas-liquid separation may also serve the purpose of further diluting the chlorine dioxide and thereby minimising the risk for decomposition. In some cases inert gas may be introduced into to the gas stream leaving the gas-liquid separator. Any inert gas suitable as motive gas for the eductor can be used also for the gas-liquid separator. The gas stream withdrawn preferably comprises from 1 to 15 wt%, most preferably from 3 to 12 wt% of chlorine dioxide. Low concentrations are desirable for some applications like treatment of flue gas, while high concentrations are preferable in embodiments where the gas stream are brought to an absorber to produce an aqueous solution containing chlorine dioxide.

In order to facilitate the gas-liquid separation the temperature in the separator is preferably maintained from 30 to 90°C, most preferably from 40 to 80°C, particularly from 50 to 75°C.

In some cases it may be favourable to separate only part of the chlorine dioxide and thus withdraw in the gas stream, for example, from 20 to 80% or from 30 to 70% of the chlorine dioxide from the diluted product stream. In order to utilise the chlorine dioxide remaining in the liquid phase, this may at least partly be recovered as a liquid product and used for bleaching or water treatment where the remaining acid, salt and other possible by-products do not make any significant harm. The term gas-liquid separator as used herein, refers to any kind of equipment suitable for separating gas and liquid. Examples of gas-liquid separators are stripper columns, cyclone separators, vented tanks, etc.

Examples of stripper columns include plate columns, packed bed columns and wetted-wall (falling film) columns. In an embodiment the stripper column is a packed bed column that may comprise any kind of standard packing, examples of which include Raschig rings, Berl saddles, Intalox saddles etc. A stripper column is preferably operated by entering the diluted product stream into the upper part of the column and blowing inert gas into the lower part thereof. The liquid phase is then preferably collected at the bottom of the column and withdrawn while the gas stream comprising chlorine dioxide can be withdrawn at any position above the liquid level.

Examples of cyclone separators include those comprising a substantially cylindrical or at least partially conical vessel where the diluted product stream from the eductor is introduced substantially tangentially into the vessel, preferably into the upper part thereof. The liquid phase is preferably leaving the vessel at the bottom while the gas stream comprising chlorine dioxide preferably is leaving at the upper part of the vessel. To further facilitate the gas-liquid separation the cyclone separator is preferably operated at subatmospheric pressure. In case inert gas is added, it is preferably introduced directly into the cyclone separator or to the diluted product stream prior to entering the cyclone separator or to the gas stream leaving the gas-liquid separator.

In case a tank is used as a gas-liquid separator it is preferably supplied with a blower for inert gas close to the bottom.

The gas stream comprising chlorine dioxide may be withdrawn from the gas-liquid separator by any suitable means e.g. a device creating a subatmospheric pressure, such as a fan. The device may, for example, be placed directly after the gas-liquid separator or after an optional absorber.

In case the diluted product stream from the eductor is brought to an absorber, soluble species such as alkali metal salt of the acid and unreacted feed chemicals are also absorbed into the water, while gaseous components with limited solubility, like oxygen, are withdrawn in a gas phase. The flow rate of the water to the absorber, either chilled or not, is preferably adjustable so that the chlorine dioxide concentration can be kept constant independently of the production rate. The aqueous solution obtained in the absorber can have a chlorine dioxide concentration within a wide range, for example from 0.1 g/liter to 12 g/liter, preferably from 3 g/liter to 10 g/liter, most preferably from 4 g/liter to 8 g/liter. The concentration of unreacted chlorate in the aqueous solution, which is dependent on the conversion degree, is suitably below 0.33 moles/mole ClO₂, preferably below 0.11 moles/mole ClO₂, most preferably below 0.053 moles/mole ClO₂. The alkali metal salt concentration is dependent on the chlorine dioxide concentration and is suitably from 0.74 mmoles/liter to 59 mmoles/liter. The pH of the aqueous solution can vary within a wide range, partly dependent of the chlorine dioxide concentration, for example from 0.1 to 1, preferably from 0.2 to 0.8.

If a gas stream comprising chlorine dioxide from a gas-liquid separator is brought to an absorber, this is also operated as described above with the exception that nongaseous components are not included. Thus, it is then possible to obtain an aqueous solution of chlorine dioxide substantially free from unreacted acid fed to the reactor or salts thereof, as well as of unreacted chlorate. The chlorine dioxide concentration of such a solution may be as stated above, while the pH in most cases is from 2 to 4.

By the term absorber as used herein is meant any column or tower or the like where gas is contacted with a liquid flow to absorb soluble compounds therein, preferably in a continuous counter-current flow. Inside the absorber are preferably placed devices such as plates or packing elements to provide interfacial surfaces where the mass transfer between the gas and the liquid can take place. Examples of useful packing elements include Raschig rings, Berl saddles, Intalox saddles etc. Examples of plates include sieve plates and bubble cap plates.

The process of the invention is particularly suitable for the production of chlorine dioxide in small-scale, for example from 0.5 to 250 kg ClO₂/hr, preferably from 10 to 150 kg ClO₂/hr.

A typical small-scale production unit of the invention normally includes only one reactor, although it is possible to arrange several, for example up to 15 or more reactors in parallel, for example as a bundle of tubes.

The invention further concerns a production unit for the production of chlorine dioxide, said unit comprising: a reactor provided with one or more feed inlets for acid, reducing agent and alkali metal chlorate, wherein the reactor is a substantially tubular through-flow vessel or pipe; and an eductor connected to the reactor provided with an inlet for a gaseous motive stream, means for mixing the product stream comprising chlorine dioxide including any liquid and gas from the reactor therein with the gaseous motive stream to obtain a diluted product stream, and an outlet for said diluted product stream.

In an embodiment the production unit further comprises a gas-liquid separator connected to the outlet of the eductor, means for withdrawing a gas stream comprising chlorine dioxide from the gas-liquid separator, and optionally an absorber and means for bringing the gas stream comprising chlorine dioxide to the absorber.

In an another embodiment the production unit comprises an absorber and means for bringing the diluted product stream from the eductor to the absorber.

The production unit of the invention is particularly suitable for use in the process of the invention and regarding further optional and preferred features the above description of the process is referred to.

Embodiments of the invention will now be described with reference to the enclosed drawing. The scope of the invention is, however, not limited to these embodiments but only to the scope of the appended claims.

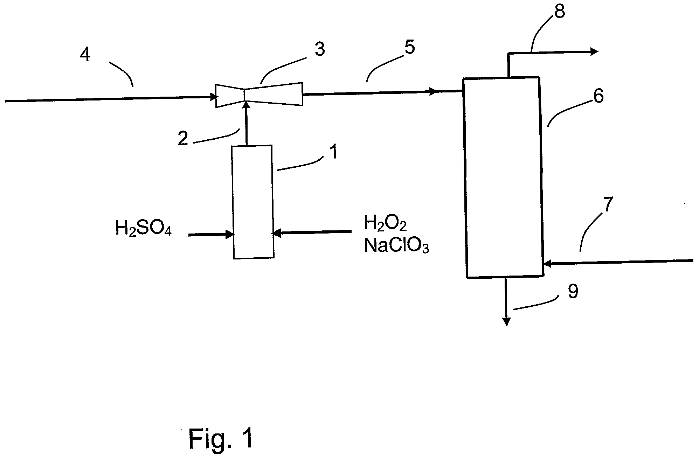

Figures 1, 2 and 3 schematically show process schemes of different embodiments of the invention.

Common to the embodiments of Fig. 1, 2 and 3 is that sulphuric acid and a pre-mixed aqueous solution of sodium chlorate and hydrogen peroxide are fed to a vertical through-flow tubular reactor 1 and are reacted therein to form a product stream 2 of liquid and gas, usually at least partly as foam. The product stream 2 comprises chlorine dioxide, oxygen, sodium sulfate and some remaining sulfuric acid and sodium chlorate. An eductor 3 is supplied with motive gas, usually air, to generate a slightly subatmospheric pressure bringing the product stream 2 out from the reactor 1 into the eductor 3. The eductor 3 can be of any standard type comprising a chamber or the like in which the product stream 2 is mixed with motive gas 4 to form a diluted product stream 5, usually also comprising both liquid and gas with chlorine dioxide present in both phases.

In the embodiment of Fig. 1, the diluted product stream 5 from the eductor 3 is brought to a gas-liquid separator 6 such as a stripper column, vented tank or a cyclone separator. The gas-liquid separator 6 is supplied with inert gas 7 such as air mixing with the gas separated from the diluted product stream to form a gas stream 8 comprising chlorine dioxide that is withdrawn. The liquid phase separated from the gas, an aqueous solution comprising sodium sulfate, sulfuric acid and usually some chlorate and dissolved gas, is withdrawn as a stream 9, and may, for example, be used for pH control, sulfur recovery or in some cases simply be disposed of after neutralisation.

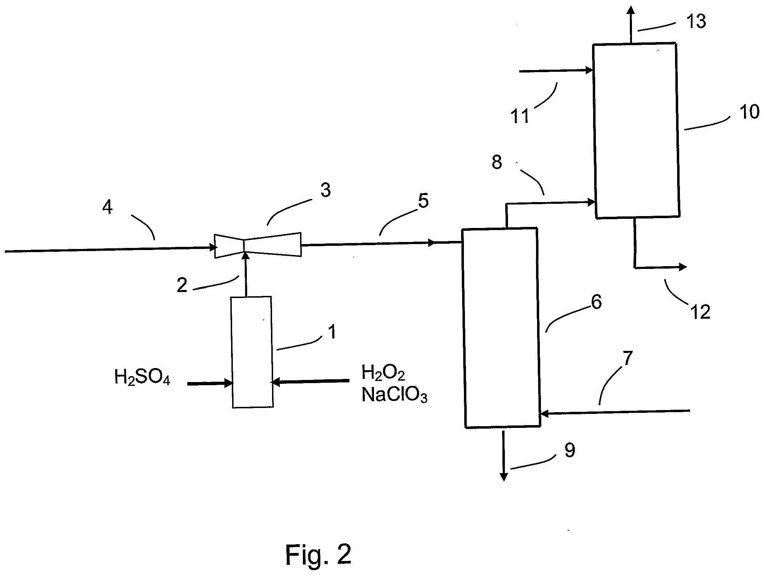

In the embodiment of Fig. 2 the gas-liquid separator 6 works as in the embodiment of Fig. 1, but the gas stream 8 comprising chlorine dioxide is brought to an absorber 10 fed with chilled water 11 to dissolve chlorine dioxide and form an aqueous solution thereof that is withdrawn as stream 12 and constitutes the actual product of the process. Gaseous components not dissolved, such as motive gas fed to the eductor 3, oxygen generated in the reactor 1 and inert gas introduced to the gas-liquid separator 8 are withdrawn as stream 13.

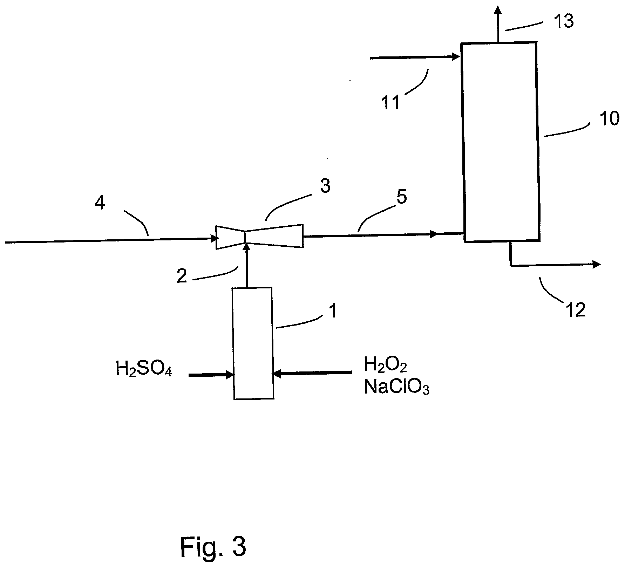

In the embodiment of Fig. 3 the diluted product stream 5 from the eductor 3 is brought to an absorber 10 fed with chilled water 11 to dissolve chlorine dioxide and form an aqueous solution thereof that is withdrawn as stream 12 and constitutes the actual product of the process. As there has been no previous gas-liquid separation the product stream 12 comprises not only chlorine dioxide, but also other soluble components from stream 5 such as sodium sulfate, sulfuric acid and usually some chlorate. Gaseous components not dissolved such as motive gas fed to the eductor 3 and oxygen generated in the reactor 1 are withdrawn as stream 13.

The process equipment, including the reactor 1 , the eductor 3 and the optional gas-liquid separator 6 and absorber 10, are suitably made from materials resistant to the chemicals they are in contact with, such as one or more of hydrogen peroxide, sodium chlorate, sulfuric acid and chlorine dioxide. Such materials include, for example, glass, tantalum, titanium, fiberglass reinforced plastic, fluoro plastics like PVDF (polyvinylidene fluoride) CPVC (chlorinated polyvinyl chloride), PTFE (polytetrafluoro ethylene), PFA (perfluoro alkoxy polymer), ECTFE (ethylene chlorotrifluoro ethylene) or FEP (fluorinated ethylene propylene), or the use of these materials as a liner material to a structural material like steel or stainless steel. Suitable fluoro plastics are sold under the trademarks Kynar®, Teflon® or Halar®.

## Claims

1. A process for the production of chlorine dioxide, said process comprising the steps of continuously:
feeding to a reactor an acid, alkali metal chlorate and a reducing agent;
reacting the alkali metal chlorate with the acid and the reducing agent to form a product stream comprising chlorine dioxide, water and alkali metal salt of the acid; and,
bringing the product stream including any liquid and gas in the reactor from the reactor to an eductor and mixing it with a gaseous motive stream fed to the eductor and thereby forming a diluted product stream.

2. A process as claimed in claim 1, further comprising a steps of:
bringing the diluted product stream to a gas-liquid separator;
separating gas from liquid in the diluted product stream to form a gas stream comprising chlorine dioxide; and,
withdrawing the gas stream comprising chlorine dioxide from the gas-liquid separator.

3. A process as claimed in claim 2, further comprising the steps of:
bringing the gas stream comprising chlorine dioxide from the gas-liquid separator to an absorber;
contacting said gas stream with a flow of water to form an aqueous solution containing chlorine dioxide; and,
withdrawing the aqueous solution containing chlorine dioxide from the absorber.

4. A process as claimed in claim 1, further comprising the steps of:
bringing the diluted product stream to an absorber;
contacting the diluted product stream with a flow of water to form an aqueous solution containing chlorine dioxide; and,
withdrawing the aqueous solution containing chlorine dioxide from the absorber.

5. A process as claimed in any one of the claims 1-4, wherein the product stream from the reactor comprises both liquid and gas.

6. A process as claimed in any one of the claims 1-5, wherein the diluted product stream from the eductor comprises both liquid and gas.

7. A process as claimed in any one of the claims 1-6, wherein the gaseous motive stream fed to the eductor is a gas or mixture of gases that is inert in respect of chlorine dioxide.

8. A process as claimed in claim 7, wherein the gaseous motive stream fed to the eductor is air.

9. A process as claimed in any one of the claims 1-8, wherein the reactor is a through-flow vessel or a pipe.

10. A process as claimed claim 9, wherein the acid, the alkali metal chlorate and the reducing agent are fed close to one end of the reactor while the product stream is withdrawn at the other end of the reactor.

11. A process as claimed in any one of the claims 1-10, wherein the reducing agent is hydrogen peroxide.

12. A process as claimed in any one of the claims 1-11, wherein the acid is sulphuric acid.

13. Production unit for the production of chlorine dioxide, said unit comprising: a reactor provided with one or more feed inlets for acid, reducing agent and alkali metal chlorate, wherein the reactor is a substantially tubular through-flow vessel or pipe; and
an eductor connected to the reactor provided with an inlet for a gaseous motive stream, means for mixing the product stream comprising chlorine dioxide and including any liquid and gas from the reactor with the gaseous motive stream to obtain a diluted product stream, and an outlet for said diluted product stream.

14. Production unit as claimed in claim 13 further comprising a gas-liquid separator connected to the outlet of the eductor, means for withdrawing a gas stream comprising chlorine dioxide from the gas-liquid separator.

15. Production unit as claimed in claim 14 further comprising an absorber and means for bringing the gas stream comprising chlorine dioxide from the gas-liquid separator to the absorber.

16. Production unit as claimed in claim 13 further comprising an absorber and means for bringing the diluted product stream from the eductor to the absorber.

## Patentansprüche

1. Verfahren zum Herstellen von Chlordioxid, wobei das Verfahren die Schritte umfasst, kontinuierlich:
einem Reaktor eine Säure, ein Alkalimetallchlorat und ein Reduktionsmittel zuzuführen;
das Alkalimetallchlorat mit der Säure und dem Reduktionsmittel reagieren zu lassen, um einen Produktstrom zu bilden, welcher Chlordioxid, Wasser und das Alkalimetallsalz der Säure umfasst; und,
den Produktstrom einschließlich jeglicher Flüssigkeit und jeglichem Gas in dem Reaktor von dem Reaktor zu einem Eduktor zu verbringen und ihn mit einem gasförmigen Treibstrahl dem Eduktor zuzuführen und dadurch einen verdünnten Produktstrom zu bilden.

2. Verfahren nach Anspruch 1, das ferner folgende Schritte umfasst: das Verbringen des verdünnten Produktstroms zu einem Gas-Flüssigkeitsabscheider;
Trennen des Gases von der Flüssigkeit in dem verdünnten Produktstrom, um einen Gasstrom zu bilden, der Chlordioxid umfasst; und,
Herausziehen des Gasstroms, der Chlordioxid umfasst, von dem Gas-Flüssigkeitsabscheider.

3. Verfahren nach Anspruch 2, das ferner folgende Schritte umfasst: das Verbringen des Gasstroms, welcher Chlordioxid umfasst, von dem Gas-Flüssigkeitsabscheider zu einem Absorber;
Inkontaktbringen des Gasstroms mit einem Wasserfluss, um eine wässrige Lösung zu bilden, die Chlordioxid enthält; und,
Herausziehen der wässrigen Lösung, welche Chlordioxid enthält, aus dem Absorber.

4. Verfahren nach Anspruch 1, das ferner folgende Schritte umfasst:
das Verbringen des verdünnten Produktstroms zu einem Absorber;
Inkontaktbringen des verdünnten Produktstroms mit einem Wasserfluss, um eine wässrige Lösung zu bilden, die Chlordioxid enthält; und,
Herausziehen der wässrigen Lösung, welche Chlordioxid enthält, aus dem Absorber.

5. Verfahren nach einem der Ansprüche 1-4, wobei der Produktstrom von dem Reaktor sowohl Flüssigkeit als auch Gas umfasst.

6. Verfahren nach einem der Ansprüche 1-5, wobei der verdünnte Produktstrom von dem Eduktor sowohl Flüssigkeit als auch Gas umfasst.

7. Verfahren nach einem der Ansprüche 1-6, wobei der gasförmige Treibstrahl, der dem Eduktor zugeführt wird, ein Gas oder eine Mischung von Gasen ist, welche im Hinblick auf Chlordioxid inert ist.

8. Verfahren nach Anspruch 7, wobei der gasförmige Treibstrahl, der dem Eduktor zugeführt wird, Luft ist.

9. Verfahren nach einem der Ansprüche 1-8, wobei der Reaktor ein Durchflussbehältnis oder ein Rohr ist.

10. Verfahren nach Anspruch 9, wobei die Säure, das Alkalimetallchlorat und das Reduktionsmittel nahe einem Ende des Reaktors zugeführt werden, während der Produktstrom am anderen Ende des Reaktors herausgezogen wird.

11. Verfahren nach einem der Ansprüche 1-10, wobei das Reduktionsmittel Wasserstoffperoxid ist.

12. Verfahren nach einem der Ansprüche 1-11, wobei die Säure Schwefelsäure ist.

13. Herstellungseinheit für die Herstellung von Chlordioxid, wobei die Einheit Folgendes umfasst: einen Reaktor, der mit einem oder mehreren Zuführeinrichtungen für Säure, einem Reduktionsmittel und Alkalimetallchlorat ausgestattet ist; wobei der Reaktor im Wesentlichen ein rohrförmiges Durchflussbehältnis oder ein Rohr ist; und
ein Eduktor, der mit dem Reaktor verbunden ist, der mit einem Einlass für einen gasförmigen Treibstrahl, Mittel zum Mischen des Produktstroms, welcher Chlordioxid und jegliche Flüssigkeit und jegliches Gas von dem Reaktor einschließt, mit dem gasförmigen Treibstrahl, um einen verdünnten Produktstrom zu erhalten, und einem Auslass für den verdünnten Produktstrom ausgestattet ist.

14. Herstellungseinheit nach Anspruch 13, welche ferner einen Gas-Flüssigkeitsabscheider umfasst, der mit dem Auslass des Eduktors verbunden ist, Mittel zum Herausziehen eines Gasstroms, welcher Chlordioxid umfasst, aus dem Gas-Flüssigkeitsabscheider.

15. Herstellungseinheit nach Anspruch 14, welche ferner einen Absorber und Mittel zum Verbringen des Gasstroms, welcher Chlordioxid umfasst, von dem Gas-Flüssigkeitsabscheider zu dem Absorber umfasst.

16. Herstellungseinheit nach Anspruch 13, welche ferner einen Absorber und Mittel zum Verbringen des verdünnten Produktstroms von dem Eduktor zu dem Absorber umfasst.

## Revendications

1. Procédé de production de dioxyde de chlore, ledit procédé comprenant les étapes suivantes en continu :
introduire dans un réacteur un acide, un chlorate de métal alcalin et un agent réducteur ;
faire réagir le chlorate de métal alcalin avec l'acide et l'agent réducteur afin de former un flux de produits contenant du dioxyde de chlore, de l'eau et du sel de métal alcalin de l'acide ; et,
conduire le flux de produits contenant n'importe quels liquide et gaz dans le réacteur à partir du réacteur vers un éjecteur et le mélanger avec un flux gazeux moteur introduit dans l'éjecteur et formant ainsi un flux de produits dilué.

2. Procédé selon la revendication 1, comprenant en outre les étapes suivantes :
conduire le flux de produits dilué jusqu'à un séparateur gaz-liquide ;
séparer le gaz du liquide dans le flux de produits dilué pour former un flux de gaz comprenant du dioxyde de chlore ; et,
extraire du séparateur gaz-liquide le flux de gaz comprenant du dioxyde de chlore.

3. Procédé selon la revendication 2, comprenant en outre les étapes suivantes :
conduire le flux de gaz comprenant du dioxyde de chlore à partir du séparateur gaz-liquide jusqu'à un absorbeur ;
mettre en contact ledit flux de gaz avec un écoulement d'eau pour former une solution aqueuse contenant du dioxyde de chlore ; et,
extraire de l'absorbeur la solution aqueuse contenant du dioxyde de chlore.

4. Procédé selon la revendication 1, comprenant en outre les étapes suivantes :
conduire le flux de produits dilué jusqu'à un absorbeur ;
mettre en contact le flux de produits dilué avec un écoulement d'eau pour former une solution aqueuse contenant du dioxyde de chlore ; et,
extraire de l'absorbeur la solution aqueuse contenant du dioxyde de chlore.

5. Procédé selon l'une quelconque des revendications 1 à 4, dans lequel le flux de produits provenant du réacteur comprend du liquide et du gaz.

6. Procédé selon l'une quelconque des revendications 1 à 5, dans lequel le flux de produits dilué provenant de l'éjecteur comprend du liquide et du gaz.

7. Procédé selon l'une quelconque des revendications 1 à 6, dans lequel le flux gazeux moteur introduit dans l'éjecteur est un gaz ou un mélange de gaz qui est inerte vis-à-vis du dioxyde de chlore.

8. Procédé selon la revendication 7, dans lequel le flux gazeux moteur introduit dans l'éjecteur est de l'air.

9. Procédé selon l'une quelconque des revendications 1 à 8, dans lequel le réacteur est une cuve ou un tuyau de circulation.

10. Procédé selon la revendication 9, dans lequel l'acide, le chlorate de métal alcalin et l'agent réducteur sont introduits à proximité d'une extrémité du réacteur tandis que le flux de produits est extrait à l'autre extrémité du réacteur.

11. Procédé selon l'une quelconque des revendications 1 à 10, dans lequel l'agent réducteur est du peroxyde d'hydrogène.

12. Procédé selon l'une quelconque des revendications 1 à 11, dans lequel l'acide est de l'acide sulfurique.

13. Unité de production destinée à la production de dioxyde de chlore, ladite unité comprenant : un réacteur présentant une ou plusieurs entrées d'alimentation pour l'acide, l'agent réducteur et le chlorate de métal alcalin, le réacteur étant une cuve ou un tuyau de circulation sensiblement tubulaire ; et
un éjecteur relié au réacteur, présentant une entrée pour un flux gazeux moteur, un moyen de mélange du flux de produits comprenant du dioxyde de chlore, et contenant n'importe quels liquide et gaz provenant du réacteur avec le flux gazeux moteur pour obtenir un flux de produits dilué, et une sortie pour ledit flux de produits dilué.

14. Unité de production selon la revendication 13 comprenant en outre un séparateur gaz-liquide relié à la sortie de l'éjecteur, un moyen d'extraction d'un flux de gaz comprenant du dioxyde de chlore du séparateur gaz-liquide.

15. Unité de production selon la revendication 14 comprenant en outre un absorbeur et un moyen permettant de conduire le flux de gaz comprenant du dioxyde de chlore du séparateur gaz-liquide à l'absorbeur.

16. Unité de production selon la revendication 13 comprenant en outre un absorbeur et un moyen permettant de conduire le flux de produits dilué de l'éjecteur à l'absorbeur.
